# EUROPÄISCHE PATENTSCHRIFT

(11) **EP 2 230 147 B1**
(45) Veröffentlichungstag und Bekanntmachung des Hinweises auf die Patenterteilung: **01.02.2012**
(21) Anmeldenummer: 09155732.2
(22) Anmeldetag: 20.03.2009
(51) Int. Cl.: B61G 11/16, B60R 19/34, F16F 7/12

(54) **Energieverzehrelement und Stoßsicherung mit einem Energieverzehrelement**
Energy consumption element and impact protection with an energy consumption element
Elément de consommation d'énergie et sécurité contre les chocs dotée d'un élément de consommation d'énergie

(43) Veröffentlichungstag der Anmeldung: 22.09.2010
(73) Patentinhaber: Voith Patent GmbH, 89522 Heidenheim (DE)
(72) Erfinder: Beika, Uwe, 03222, Lübbenau (DE); Drobek, Steffen, 39120, Magdeburg (DE)
(74) Vertreter: Rupprecht, Kay

(56) Entgegenhaltungen:
- DE-A1- 2 624 188
- DE-A1- 4 016 044
- GB-A- 191 118 213
- JP-A- 59 058 245

## Beschreibung

Die vorliegende Erfindung betrifft ein Energieverzehrelement mit den Merkmalen des Oberbegriffes des Patentanspruches 1. Demnach betrifft die Erfindung insbesondere ein Energieverzehrelement in Gestalt eines sich in einer Längsrichtung erstreckenden Hohlkörpers, wobei das Energieverzehrelement eine die Mantelfläche des Hohlkörpers bildende Wand aufweist, und wobei das Energieverzehrelement ausgelegt ist, bei Überschreiten einer in eine Stirnseite des Energieverzehrelements eingeleiteten kritischen Stoßkraft anzusprechen und zumindest einen Teil der bei der Übertragung der Stoßkraft über das Energieverzehrelement anfallenden Stoßenergie durch plastische Verformung zu verzehren, d.h. in Verformungsenergie und Wärme umzuwandeln

Die Erfindung betrifft ferner eine Stoßsicherung, insbesondere zur Verwendung als Seitenpuffer an der Stirnseite eines spurgeführten Fahrzeuges, wie etwa eines Schienenfahrzeuges, oder zur Verwendung in einem Prellbock, wobei die Stoßsicherung ein Energieverzehrelement der zuvor genannten Art aufweist.

Die Druckschrift JP 59 058 245 A betrifft ein Energieverzehrelement in Gestalt eines sich in einer Längsrichtung erstreckenden Hohlkörpers, wobei dieses Energieverzehrelement ein helixförmiges Verformungselement aufweist, dessen Längsachse mit der Längsachse des Hohlkörpers überstimmt. Im Einzelnen ist bei dem aus diesem Stand der Technik bekannten Energieverzehrelement vorgesehen, dass das helixförmige Verformungselement eine Vielzahl von Windungen aufweist, die entweder mit oder ohne Spalt aufeinanderliegen.

Die Druckschrift GB 18213 A betrifft ein Energieverzehrelement, bei welchem ebenfalls helixförmige Verformungselemente zum Einsatz kommen. Das helixförmige Verformungselement weist eine Vielzahl von Windungen auf, die ohne Spalt aufeinanderliegen.

Energieverzehrelemente der eingangs genannten Art sind dem Prinzip nach allgemein aus dem Stand der Technik bekannt und werden beispielsweise in der Schienenfahrzeugtechnik insbesondere als Teil einer Stoßsicherung eingesetzt. Bei Schienenfahrzeugen besteht in der Regel eine solche Stoßsicherung aus einer Kombination einer Zug-/Stoßeinrichtung (beispielsweise in Gestalt eines Federapparats) und einem irreversiblen Energieverzehrelement, wobei das Energieverzehrelement dazu dient, das Fahrzeug insbesondere auch bei größeren Auffahrgeschwindigkeiten zu schützen. Üblicherweise ist dabei vorgesehen, dass die Zug-/Stoßeinrichtung bis zu einer definierten Größe Zug- und Stoßkräfte aufnimmt und darüber hinausgehende Kräfte zunächst in ein Energieverzehrelement und über das ausgelegte Energieniveau hinausgehende Energie in das Fahrzeuguntergestell weiterleitet.

Mit einer Zug-/Stoßeinrichtung werden zwar Zug- und Stoßkräfte, welche während des normalen Fahrbetriebes etwa bei einem mehrgliedrigen Schienenfahrzeug beispielsweise zwischen den einzelnen Wagenkästen auftreten, in dieser in der Regel regenerativ ausgebildeten Zug-/Stoßeinrichtung absorbiert. Bei Überschreiten der Betriebslast der Zug-/Stoßeinrichtung hingegen, wie etwa beim Aufprall des Fahrzeuges auf ein Hindernis, wird die Zug-/Stoßeinrichtung und die gegebenenfalls vorgesehene Gelenk- oder Kupplungsverbindung zwischen den einzelnen Wagenkästen bzw. die Schnittstelle zwischen den einzelnen Wagenkästen möglicherweise zerstört oder beschädigt. Bei höheren Kollisionsenergien reicht die Zug-/Stoßeinrichtung allein nicht für einen Verzehr der insgesamt anfallenden Energie aus. Dadurch besteht die Gefahr, dass das Fahrzeuguntergestell bzw. der komplette Wagenkasten zum weiteren Energieverzehr herangezogen wird. Dabei wird dieses extremen Belastungen ausgesetzt und unter Umständen beschädigt oder gar zerstört. Bei Schienenfahrzeugen läuft in solch einem Fall das Fahrzeug Gefahr, zu entgleisen.

Mit dem Ziel, das Fahrzeuguntergestell gegen Beschädigungen bei starken Auffahrstößen zu schützen, kommt als zusätzliche oder alleinige Energieverzehrvorrichtung häufig ein destruktives Energieverzehrelement zum Einsatz, welches beispielsweise derart ausgelegt ist, dass es nach Ausschöpfung des Arbeitsverzehrs der Zug-/Stoßeinrichtung anspricht und die durch den Krafttluss über das Energieverzehrelement übertragene Energie zumindest teilweise absorbiert und somit abbaut. Als Energieverzehrelemente kommen insbesondere Verformungskörper in Frage, bei denen nach Überschreiten einer kritischen Druckkraft durch eine (gewollte) plastische Verformung in destruktiver Weise die Stoßenergie in Verformungsenergie und Wärme umgewandelt wird.

Ein Energieverzehrelement, in welchem zur Umwandlung der Stoßenergie ein Verformungsrohr verwendet wird, weist eine im Wesentlichen rechteckig verlaufende Kennlinie auf, wodurch nach dem Ansprechen des Energieverzehrelements eine maximale Energieaufnahme sichergestellt ist.

Aus der Druckschrift DE 102 52 175 A1 ist beispielsweise die Verwendung eines herkömmlichen Energieverzehrelements in einer Stoßsicherung bekannt. Bei diesem Stand der Technik ist die Stoßsicherung als Hülsenpuffer für bewegliche oder feste Tragstrukturen ausgeführt. Hierbei kommt ein teleskopartiger Aufbau zum Einsatz, der ein Puffergehäuse in Gestalt einer Pufferhülse, ein darin zumindest teilweise aufgenommenes Kraftübertragungsglied in Gestalt eines Pufferstößels sowie ein Dämpfungselement beispielsweise in Gestalt einer Feder oder eines Elastomerkörpers aufweist. Bei einem derartigen Aufbau dient das Puffergehäuse als Längsführung und zur Abstützung von Querkräften, während das in dem Puffergehäuse aufgenommene Dämpfungselement (Feder bzw. Elastomerkörper) zur Kraftübertragung in Längsrichtung dient.

In der Druckschrift DE 102 52 175 A1 wird das Problem berücksichtigt, dass nach Erreichen des maximalen Pufferhubes, d.h. nach Ausschöpfung der Dämpfungseigenschaft des Dämpfungselements, die über die charakteristische Betriebslast des Hülsenpuffers hinausgehenden Stoßkräfte nicht ungedämpft in die Tragstruktur weitergeleitet werden sollen. Hierzu sind bei dem aus diesem Stand der Technik bekannten Hülsenpuffer die Führungsteile des Hülsenpuffers so ausgebildet, dass nach Ausschöpfung des maximalen Pufferhubs ein Führungsteil des Pufferstößels auf einen definierten Anschlag auftrifft und dabei geeignet vorgesehene Sollbruchverbindungen zwischen dem Führungsteil des Pufferstößels und dem Pufferstößel reißen. Das Vorsehen derartiger Sollbruchverbindungen gestattet es, die Verformungslänge des Puffers zu vergrößern, da nach dem Versagen der Sollbruchverbindungen eine Relativbewegung des Pufferstößels in Richtung des Puffergehäuses ermöglicht wird. Die damit erzielbare vergrößerte Verformungslänge erlaubt die plastische Deformation des Puffergehäuses bei Überlast.

Im Einzelnen ist bei der aus der Druckschrift DE 102 52 175 A1 bekannten Lösung ein Endbereich des Pufferstößels teleskopartig in dem Puffergehäuse aufgenommen. Bei Ansprechen der Sollbruchverbindungen bewegt sich der Pufferstößel weiter in Richtung Puffergehäuse, infolgedessen das Puffergehäuse plastisch deformiert wird, so dass in destruktiver Weise die Stoßenergie in Verformungsenergie und Wärme umgewandelt wird.

Bei dieser aus dem Stand der Technik bekannten Lösung kommt somit dem Puffergehäuse bei Überlast die Funktion eines Energieverzehrelements zu, welches ausgelegt ist, bei Überschreiten einer in eine Stirnseite des Energieverzehrelements eingeleiteten kritischen Stoßkraft anzusprechen und zumindest einen Teil der bei der Übertragung der Stoßkraft über das Energieverzehrelement anfallenden Stoßenergie durch plastische Verformung zu verzehren, d.h. in Verformungsenergie und Wärme umzuwandeln. Mit der bei Überlast auftretenden Deformation des Puffergehäuses wird daher eine Stoßsicherung bereitgestellt. Demnach ist der aus dem Stand der Technik bekannte Hülsenpuffer ausgelegt, im Falle von starken Auffahrstößen die Tragstruktur bis zu einem gewissen Grad vor Beschädigungen zu schützen.

Der Nachteil hierbei ist darin zu sehen, dass bei dieser aus dem Stand der Technik bekannten Lösung konstruktionsbedingt nur etwa die Hälfte der Baulänge des Puffers zur Stoßsicherung genutzt werden kann. Nach der Deformation des Puffergehäuses ist bei der bekannten Lösung insbesondere eine weitere Verkürzung in Längsrichtung des Puffers und somit eine plastische Deformation des Puffergehäuses nicht möglich.

Andererseits ist es ferner aus dem Stand der Technik bekannt, als Stoßsicherung ein Energieverzehrelement in Gestalt beispielsweise eines Verformungsrohrs zu verwenden. Bei Überschreiten einer kritischen Ansprechkraft spricht die Stoßsicherung an, wobei durch eine plastische Deformation des Verformungsrohrs die bei der Kraftübertragung anfallende Energie zumindest teilweise in Verformungsenergie und Wärme umgewandelt und somit "verzehrt" wird. Dabei ist es bekannt, das Verformungsrohr unter Querschnittsverringerung durch eine beispielsweise in einer Düsenplatte vorgesehene kegelige Bohrung zu drücken. Oder das Verformungsrohr wird im Querschnitt aufgeweitet, während es über einen Kegelring gedrückt wird. Bei dieser Ausführungsform einer Stoßsicherung ist es notwendig, einen zusätzlichen Bauraum zur Aufnahme des plastisch deformierten Verformungsrohrs vorzusehen.

Auf Grundlage dieser Nachteile liegt der Erfindung die Aufgabe zugrunde, ein Energieverzehrelement der eingangs genannten Art dahingehend weiterzubilden, dass beim Ansprechen des Energieverzehrelements der für die Aufnahme des Energieverzehrelements bereitzustellende Einbauraum im Hinblick auf den Energieverzehr möglichst optimal genutzt werden kann. Insbesondere ist ein Energieverzehrelement der eingangs genannten Art dahingehend weiterzubilden, dass sich das Energieverzehrelement beim Ansprechen über einen - bezogen auf seine Einbaulänge - möglichst langen Verformungsweg in Längsrichtung des Energieverzehrelements plastisch deformieren kann, so dass damit ein hinreichend hoher Energieverzehr mit einem definierten Ansprechverhalten des Energieverzehrelements sowie einem vorhersagbaren Ereignisablauf beim Energieverzehr möglich ist.

Diese Aufgabe wird erfindungsgemäß mit einem Energieverzehrelement gemäß dem unabhängigen Patentanspruch 1 gelöst. Vorteilhafte Weiterbildungen des Energieverzehrelements sind in den abhängigen Patentansprüchen 2 bis 11 angegeben.

Demnach ist insbesondere vorgesehen, dass mindestens ein aus einem Profil gebildetes und um die Längsachse des Hohlkörpers laufendes Verformungselement vorgesehen ist, welches die Wand des in Gestalt eines sich in einer Längsrichtung erstreckenden Hohlkörpers ausgebildeten Energieverzehrelements bildet.

Denkbar hierbei ist es beispielsweise, für das in Gestalt eines Hohlkörpers ausgebildete Energieverzehrelement als Verformungselement ein aus einem Profil, wie etwa aus einem Hohlprofil gebildetes torusförmiges Verformungselement zu verwenden, wobei die Rotationsachse des torusförmigen Verformungselements mit der Längsachse des Hohlkörpers übereinstimmt. In einer bevorzugten Realisierung sind dabei mindestens zwei um die Längsachse des Hohlkörpers laufende, jeweils torusförmig ausgebildete Verformungselemente vorgesehen, wobei die Rotationsachse von jedem der mindestens zwei torusförmigen Verformungselemente mit der Längsachse des Hohlkörpers übereinstimmt. Selbstverständlich ist es aber auch möglich, zum Ausbilden des Energieverzehrelements nur ein einziges torusförmiges Verformungselement zu verwenden.

Alternativ hierzu ist es ebenfalls denkbar, für das in Gestalt eines Hohlkörpers ausgebildete Energieverzehrelement als Verformungselement ein aus einem Profil gebildetes, helix- oder spiralförmiges Verformungselement zu verwenden, wobei die Längsachse des helix- oder spiralförmigen Verformungselements mit der Längsachse des Hohlkörpers übereinstimmt. Dabei sollte das helix- oder spiralförmige Verformungselement vorzugsweise mindestens zwei mit oder ohne Spalt aufeinanderliegende Windungen aufweisen.

Die mit der erfindungsgemäßen Lösung erzielbaren Vorteile liegen auf der Hand: Unabhängig davon, ob mindestens ein aus einem Profil gebildetes torusförmiges Verformungselement oder ein aus einem Profil gebildetes helix- oder spiralförmiges Verformungselement zum Einsatz kommt, wird ein im Wesentlichen rohr- oder konusförmiges Energieverzehrelement gebildet. Die äußere Mantelfläche des Energieverzehrelements wird aus den äußeren Flächen der Windungen selbst gebildet. Dadurch, dass das mindestens eine torusförmige bzw. helix- oder spiralförmige Verformungselement aus einem Profil, insbesondere einem Hohlprofil gebildet ist, tritt beim Ansprechen des Energieverzehrelements eie plastische Deformation der einzelnen torusförmigen Verformungselemente bzw. der einzelnen Windungen des helix- oder spiralförmigen Verformungselements auf. Dies hat zur Folge, dass beim Ansprechen des Energieverzehrelements im Vergleich zu aus dem Stand der Technik bekannten und eingangs beschriebenen Lösungen die Blocklänge des Energieverzehrelements im maximal deformierten Zustand im Verhältnis zur Länge des Energieverzehrelements im nicht-deformierten Zustand besonders klein wird.

Die erfindungsgemäße Lösung gestattet es, dass bei einer geringen Verkürzung des Energieverzehrelements in Längsrichtung ein hoher Energiebetrag verzehrt wird. Auf diese Weise kann der für den Einbau des Energieverzehrelements und der für den Einsatz im Crash-Fall bereitzustellende Einbauraum verkleinert werden.

Durch den besonderen Aufbau des in Gestalt eines Hohlkörpers ausgebildeten Energieverzehrelements, welches das mindestens eine aus einem Profil gebildete und um die Längsachse des Hohlkörpers laufende Verformungselement aufweist, hat das Energieverzehrelement während des Energieverzehrs einen selbststabilisierenden Charakter. Dies gilt insbesondere für jeden Verformungszustand des Energieverzehrelements. Demnach ist beim Energieverzehr ein vorhersehbarer Ereignisablauf möglich. Ferner kann das Energieverzehrelement sowohl in axialer als auch radialer Richtung mit weiteren Bauteilen konstruktiv verbunden werden, da das Energieverzehrelement nicht nur im undeformierten Zustand, sondern auch im deformierten Zustand eine hinreichende strukturelle Festigkeit in Längs- und Querrichtung aufweist.

Ein weiterer Vorteil der erfindungsgemäßen Lösung ist darin zu sehen, dass das Ansprechverhalten des Energieverzehrelements unempfindlich gegenüber etwaigen Imperfektionen im Material des Energieverzehrelements ist.

Diese Vorteile sind auch dann erzielbar, wenn für das um die Längsachse des Hohlkörpers laufende Verformungselement ein aus einem Profil gebildetes helix- oder spiralförmiges Verformungselement zum Einsatz kommt, wobei die Längsachse des helix- oder spiralförmigen Verformungselements mit der Längsachse des Hohlkörpers übereinstimmt. Der Vorteil des helix- oder spiralförmigen Aufbaus des Verformungselements ist darin zu sehen, dass während der Deformation eine kontinuierliche Verformung der Profilquerschnitte entlang der Helix bzw. der Spirale auf einem nahezu gleichbleibenden Verformungskraftniveau in Richtung der Helix- bzw. Spirallängsachse erfolgt.

Das Profil, aus welchem das mindestens eine um die Längsachse des Hohlkörpers laufende Verformungselement (torusförmige Verformungselemente bzw. helixförmige Verformungselemente) gebildet ist, kann eine beliebige Querschnittsgeometrie aufweisen, wie insbesondere eine kreisförmige, elliptische, hexagonale oder rechteckige Querschnittsgeometrie. Andererseits ist es selbstverständlich auch denkbar, dass das Profil als ein im Querschnitt offenes Profil ausgebildet ist, wie etwa ein Profil mit einem L-, U-, Doppel-T- oder Z-förmigen Querschnitt.

Der sich in Längsrichtung erstreckende Hohlkörper des Energieverzehrelements, welcher durch das mindestens eine aus dem Hohlprofil gebildeten und um die Längsachse des Hohlkörpers laufenden Verformungselement gebildet wird, kann einen Querschnitt aufweisen, der über die Längsrichtung des Energieverzehrelements gesehen unverändert ist. Andererseits ist es selbstverständlich auch möglich, den Querschnitt des Hohlkörpers über die Längsrichtung des Energieverzehrelements zu variieren. Insbesondere ist es dabei denkbar, dass der Hohlkörper eine sich verjüngende Formgebung aufweist. Eine derartige konische Ausgestaltung hat den Vorteil einer erhöhten Stabilität des Energieverzehrelements gegenüber seitlichen Kräften und Momenten und gegenüber exzentrischen Längskrä ften.

In einer bevorzugten Weiterbildung des erfindungsgemäßen Energieverzehrelements, bei welchem die Wand des Hohlkörpers von mehreren torusförmigen Verformungselementen gebildet wird, welche aneinander angrenzend angeordnet und miteinander stoffschlüssig verbunden sein können, ist vorgesehen, dass mindestens ein aus einem Hohlprofil gebildetes torusförmiges Zusatz-Verformungselement vorgesehen ist, dessen Rotationsachse mit den Rotationsachsen der mehreren torusförmigen Verformungselementen übereinstimmt. Das torusförmige Zusatz-Verformungselement kann dabei in einer zwischen zwei aneinander angrenzenden torusförmigen Verformungselementen gebildeten Ringnut angeordnet und mit den aneinander angrenzenden torusförmigen Verformungselementen stoffschlüssig verbunden oder geklebt sein. Andererseits ist es aber auch denkbar, das torusförmige Zusatz-Verformungselement auch außerhalb einer zwischen zwei aneinander angrenzenden torusförmigen Verformungselementen gebildeten Ringnut anzuordnen.

Andererseits ist es bei einem Energieverzehrelement, bei welchem das um die Längsachse des Hohlkörpers laufende Verformungselement in Gestalt eines aus einem Hohlprofil gebildeten, helix- oder spiralförmigen Elements ausgebildet ist, denkbar, zusätzlich zu diesem helix- oder spiralförmigen Verformungselement ein helix- oder spiralförmiges Zusatz-Verformungselement vorzusehen, wobei die Längsachse dieses helix- oder spiralförmigen Zusatz-Verformungselements mit der Längsachse des Verformungselements übereinstimmt. Dabei können die Windungen des helix- bzw. spiralförmigen Zusatz-Verformungselements in einer zwischen den Windungen des helix- bzw. spiralförmigen Verformungselements gebildeten Nut angeordnet sein. Selbstverständlich ist es aber auch denkbar, dass das helix- bzw. spiralförmige Zusatz-Verformungselement eine im Vergleich zum helix- bzw. spiralförmigen Verformungselement unterschiedliche Windungsrichtung und/oder unterschiedliche Steigung aufweist, so dass das helix- bzw. spiralförmige Zusatz-veriormungselcinent nicht in einer zwischen den Windungen des helix- bzw. spiralförmigen Verformungselements gebildeten Nut angeordnet ist. Vorzugsweise sollte das helix- bzw. spiralförmige Zusatz-Verformungselement mit dem helix- bzw. spiralförmigen Verformungselement an zumindest einem Punkt stoffschlüssig verbunden oder geklebt sein. Denkbar wäre es selbstverständlich auch, dass das helix- bzw. spiralförmige Zusatz-Verformungselement durch Verspannen an dem helix- bzw. spiralförmigen Verformungselement gehalten wird.

Im Nachfolgenden werden Ausführungsformen des erfindungsgemäßen Energieverzehrelements anhand der beigefügten Zeichnungen näher beschrieben.

Es zeigen:
- Fig. 1: eine Seitenansicht auf eine erste Ausführungsform des erfindungsgemäßen Energieverzehrelements;
- Fig. 2: eine Längsschnittansicht des in Fig.1 dargestellten Energieverzehrelements gemäß der ersten Ausführungsform der Erfindung;
- Fig. 3: eine Seitenansicht auf eine zweite Ausführungsform des erfindungsgemäßen Energieverzehrelements;
- Fig. 4: eine Längsschnittansicht des in Fig. 3 dargestellten Energieverzehrelements gemäß der zweiten Ausführungsform der Erfindung;
- Fig. 5: eine Seitenansicht auf eine dritte Ausführungsform des erfindungsgemäßen Energieverzehrelements;
- Fig. 6: eine Längsschnittansicht des in Fig. 5 dargestellten Energieverzehrelements gemäß der dritten Ausführungsform der Erfindung;
- Fig. 7: eine Seitenansicht auf eine vierte Ausführungsform des erfindungsgemäßen Energieverzehrelements;
- Fig. 8: eine Längsschnittansicht des in Fig. 7 dargestellten Energieverzehrelements gemäß der vierten Ausführungsform der Erfindung;
- Fig. 9: mögliche Querschnittsformgebungen für das Hohlprofil, aus welchem das mindestens eine Verformungselement gebildet ist;
- Fig. 10a: eine perspektivische Ansicht einer Ausführungsform des erfindungsgemä- ßen Energieverzehrelements im unverformten Zustand; und
- Fig. 10b: eine Längsschnittansicht des in Fig. 10a dargestellten Energieverzehrele- ments bei maximaler Verformung.

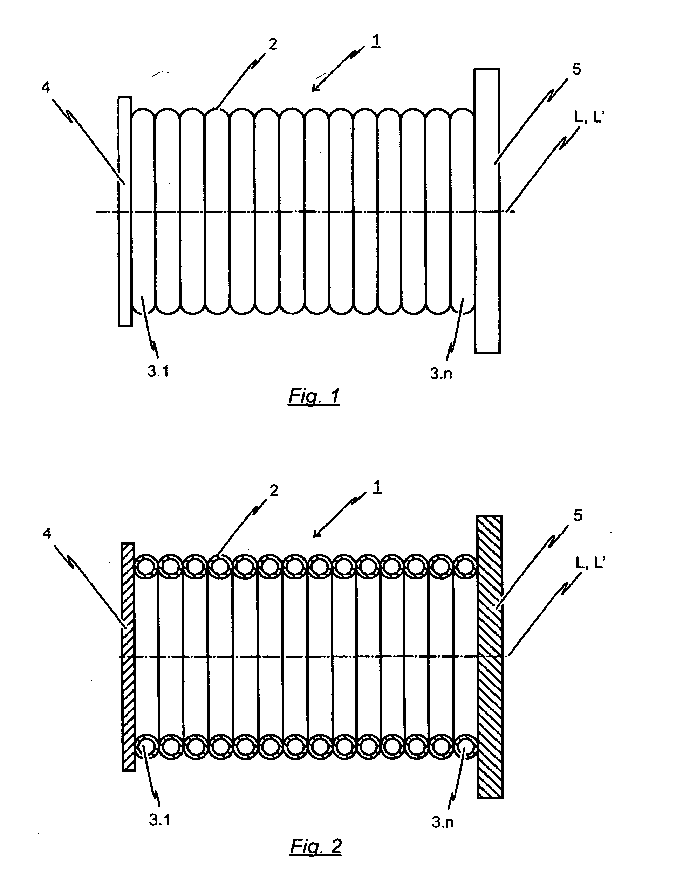

In Fig. 1 ist in einer Seitenansicht eine erste Ausführungsform des erfindungsgemäßen Energieverzehrelements 1 dargestellt. Das Energieverzehrelement 1 ist zwischen einem Kraftübertragungselement 4 und einer Grundplatte 5 derart angeordnet, dass Druckkräfte, welche in das Kraftübertragungselement 4 eingeleitet werden, über die Wand 2 des Energieverzehrelements 1 zur Grundplatte 5 übertragen werden. Wie dargestellt, ist das Energieverzehrelement 1 in Gestalt eines sich in Längsrichtung L erstreckenden Hohlkörpers ausgeführt. Die Mantelfläche des Hohlkörpers wird durch die Wand 2 des Energieverzehrelements 1 gebildet.

Bei der in Fig. 1 dargestellten ersten Ausführungsform des erfindungsgemäßen Energieverzehrelements 1 wird die Wand 2 des Energieverzehrelements 1 durch eine Vielzahl von torusförmigen Verformungselementen 3.1 bis 3.n gebildet. Diese torusförmigen Verformungselemente 3.1 bis 3.n sind derart angeordnet, dass die Rotationsachse L' eines jeden torusförmigen Verformungselements 3.1 bis 3.n mit der Längsachse L des Hohlkörpers übereinstimmt.

Der Darstellung in Fig. 2, welche eine Längsschnittansicht des in Fig. 1 gezeigten Energieverzehrelements 1 zeigt, ist unmittelbar zu entnehmen, dass die torusförmigen Verformungselemente 3.1 bis 3.n in Längsrichtung L des Energieverzehrelements 1 fluchtend gestapelt sind. Die aneinander angrenzenden torusförmigen Verformungselemente 3.1 bis 3.n sind untereinander verbunden. Denkbar hierbei ist es, die einzelnen torusförmigen Verformungselemente 3.1 bis 3.n außen und/oder innen mit radial und/oder längslaufenden Schweißnähten oder über punktförmige Verschweißungen miteinander zu verbinden. Selbstverständlich ist es aber auch denkbar, die jeweiligen Kontaktflächen der jeweils aneinander angrenzenden torusförmigen Verformungselemente 3.1 bis 3.n zu verkleben oder zu verspannen.

Der Darstellung in Fig. 2 ist ferner zu entnehmen, dass jedes torusförmige Verformungselement 3.1 bis 3.n aus einem Profil gebildet ist. Hierbei kommen im Einzelnen geschlossene Hohlprotile zum Einsatz, die eine kreisringförmige Querschnittsformgebung haben. Selbstverständlich ist es aber auch denkbar, Profile mit anderen, wie etwa mit einer hexagonalen, elliptischen oder rechteckigen Querschnittsgeometrien heranzuziehen, um die torusförmigen Verformungselemente 3.1 bis 3.n auszubilden.

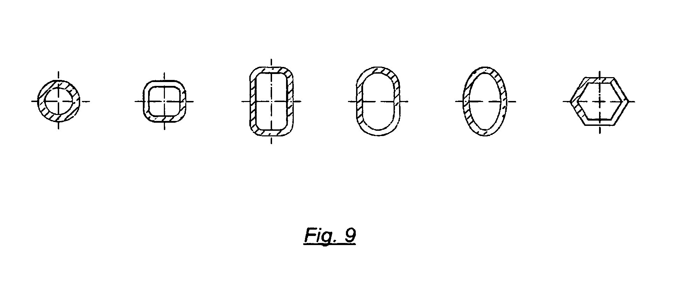

In Fig. 9 sind Beispiele für mögliche Querschnittsgeometrien der Profile gezeigt. Als Material der Profile ist grundsätzlich ein metallischer Werkstoff geeignet. Denkbar sind jedoch auch Kunststoffe, beispielsweise Thermoplaste oder Faserverbundkunststoffe.

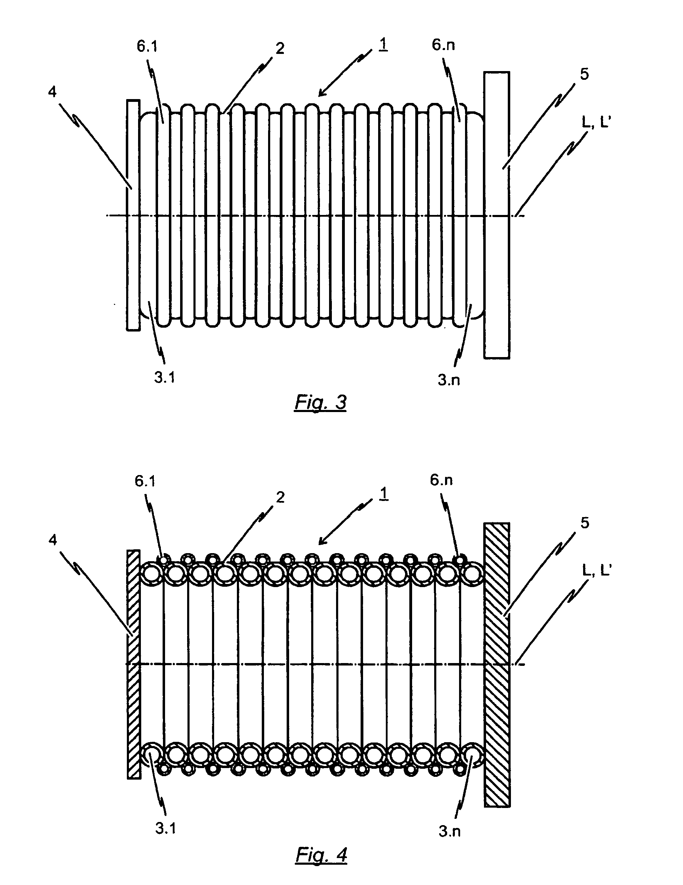

In Fig. 3 ist in einer Seitenansicht eine zweite Ausführungsform des erfindungsgemäßen Energieverzehrelements 1 gezeigt. Fig. 4 ist eine Längsschnittansicht des in Fig. 3 dargestellten Energieverzehrelements 1.

Die zweite Ausführungsform des erfindungsgemäßen Energieverzehrelements 1 unterscheidet sich von der unter Bezugnahme auf die Darstellungen in den Fig. 1 und 2 zuvor beschriebenen Ausführungsform dadurch, dass zusätzlich zu den torusförmigen Verformungselementen 3.1 bis 3.n mehrere torusförmige Zusatz-Verformungselemente 6.1 bis 6.n vorgesehen sind. Diese torusförmigen Zusatz-Verformungselemente 6.1 bis 6.n sind ebenfalls aus einem Profil gebildet. Das Profil der Zusatz-Verformungselemente 6.1 bis 6.n kann einen Querschnitt aufweisen, der verschieden von dem Querschnitt der Hohlprofile ist, welche für die torusförmigen Verformungselemente 3.1 bis 3.n zum Einsatz kommen. Bei der in den Fig. 3 und 4 dargestellten Ausführungsform des Energieverzehrelements 1 sind die Querschnitte der torusförmigen Zusatz-Verformungselemente G.1 bis 6.n kleiner im Vergleich zu den Querschnitten der Verformungselemente 3.1 bis 3.n ausgeführt. Die Querschnitte der Zusatz-Verformungselemente 6.1 bis 6.n können aber auch gleich groß wie oder größer als die Querschnitte der Verformungselemente 3.1-3.n sein.

Insbesondere der Darstellung in Fig. 4 ist zu entnehmen, dass die torusförmigen Zusatz-Verformungselemente 6.1 bis 6.n jeweils in einer zwischen zwei aneinander angrenzenden torusförmigen Verformungselementen gebildeten Ringnut angeordnet sind. Für die Querschnittsformgebung der Profile, die zum Ausbilden der torusförmigen Zusatz-Verformungselemente 6.1 bis 6.n zum Einsatz kommen, eignen sich unterschiedliche Querschnittsgeometrien, wie sie beispielsweise in Fig. 9 gezeigt sind.

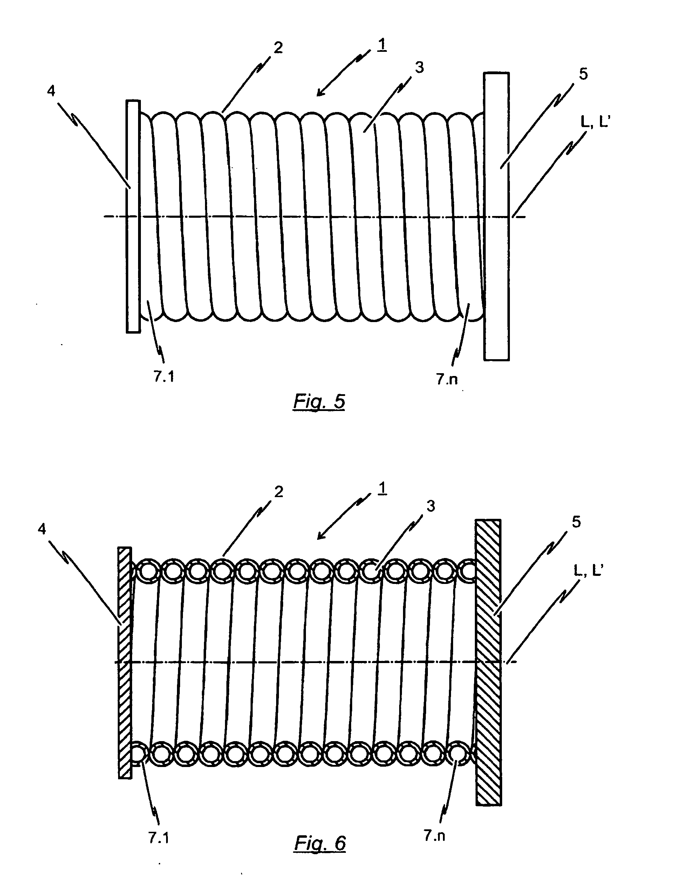

In den Figuren 5 und 6 ist eine dritte Ausführungsform des erfindungsgemäßen Energieverzehrelements 1 dargestellt. Im Einzelnen zeigt Fig. 5 ein Energieverzehrelement 1 gemäß der dritten Ausführungsform in einer Seitenansicht, während Fig. 6 das in Fig. 5 dargestellte Energieverzehrelement 1 in einer Längsschnittansicht zeigt.

Im Unterschied zu der ersten Ausführungsform des erfindungsgemäßen Energieverzehrelements 1 kommt bei der dritten Ausführungsform nur ein aus einem Profil gebildetes und um die Längsachse des Hohlkörpers laufendes Verformungselement zum Einsatz. Dieses einzige Verformungselement ist hier als helixförmiges Verformungselement 3 ausgebildet, dessen Längsachse L' mit der Längsachse L des Hohlkörpers übereinstimmt. Im Einzelnen weist das helixförmige Verformungselement 3 eine Vielzahl von Windungen 7.1 bis 7.n auf, die mit oder ohne Spalt aufeinanderliegen, wobei die einzelnen Windungen der jeweils aneinander angrenzenden Profilwicklungen 7.1 bis 7.n des helixförmigen Verformungselements 3 beispielsweise stoffschlüssig miteinander verbunden sein können.

Alternativ oder zusätzlich hierzu ist es denkbar, dass an der Außenseite der Wand 2 des Energieverzehrelements 1 und/oder an der Wandinnenseite des Energieverzehrelements 1 beispielsweise längs verlaufende Schweißnähte vorgesehen sind.

Das Profil, aus welchem das helixförmige Verformungselement 3 gemäß den Darstellungen in den Figuren 5 und 6 gebildet ist, kann - wie dargestellt - eine kreisringförmige Querschnittsgeometrie aufweisen. Wie in Fig. 9 beispielhaft dargestellt, kommen hierfür aber auch andere Querschnittsformgebungen in Frage, wie etwa eine elliptische, hexagonale oder rechteckige Querschnittsformgebung. Das Profil, aus welchem das helixförmige Verformungselement 3 gebildet ist, ist vorzugsweise aus einem metallischen Werkstoff, wobei allerdings auch andere Materialien wie etwa Kunststoffe geeignet sind.

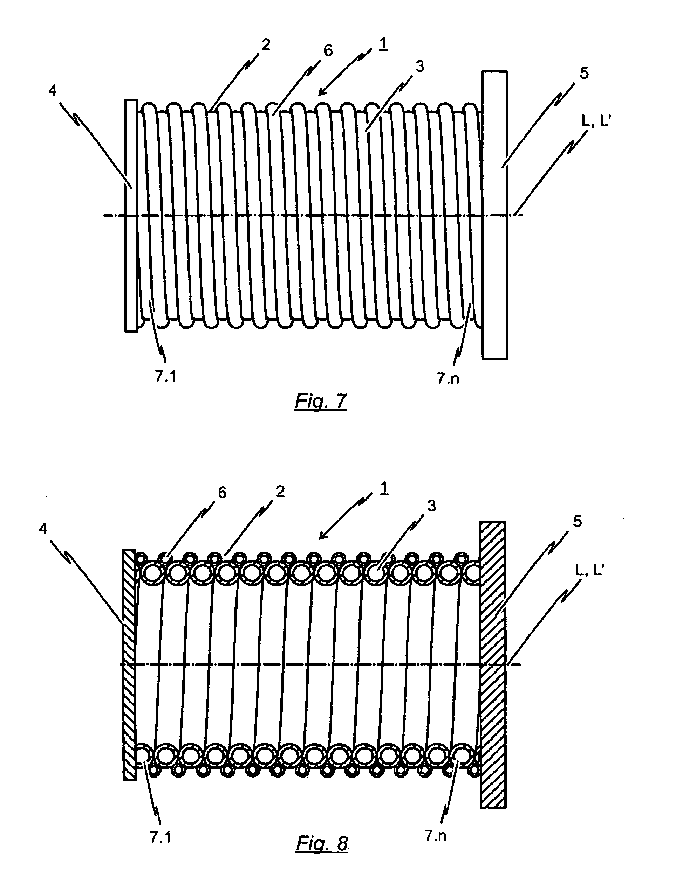

In den Figuren 7 und 8 ist eine vierte Ausführungsform des erfindungsgemäßen Energieverzehrelements 1 dargestellt. Die vierte Ausführungsform entspricht im Wesentlichen der zuvor unter Bezugnahme auf die Darstellungen in den Figuren 5 und 6 dargestellten dritten Ausführungsform, wobei allerdings zusätzlich zu dem helixförmigen Verformungselement 3 ein aus einem Profil gebildetes helixförmiges Zusatz-Verformungselement 6 vorgesehen ist, dessen Längsachse mit der Längsachse L' des helixförmigen Verformungselements übereinstimmt. Wie es der Darstellung in Fig. 8 insbesondere zu entnehmen ist, ist es möglich, dass die Windungen des helixförmigen Zusatz-Verformungsetements 6 in einer zwischen den Windungen 7.1 bis 7.n des helixförmigen Verformungselements 3 gebildeten helixförmigen Nut angeordnet sind. Dabei sollte das helixförmige Zusatz-Verformungselement 6 mit dem helixförmigen Verformungselement 3 an zumindest einem Punkt stoffschlüssig verbunden oder geklebt sein. Denkbar wäre es selbstverständlich auch, dass das helixförmige Zusatz-Verformungselement 6 durch Verspannen an dem helixförmigen Verformungselement 3 gehalten wird.

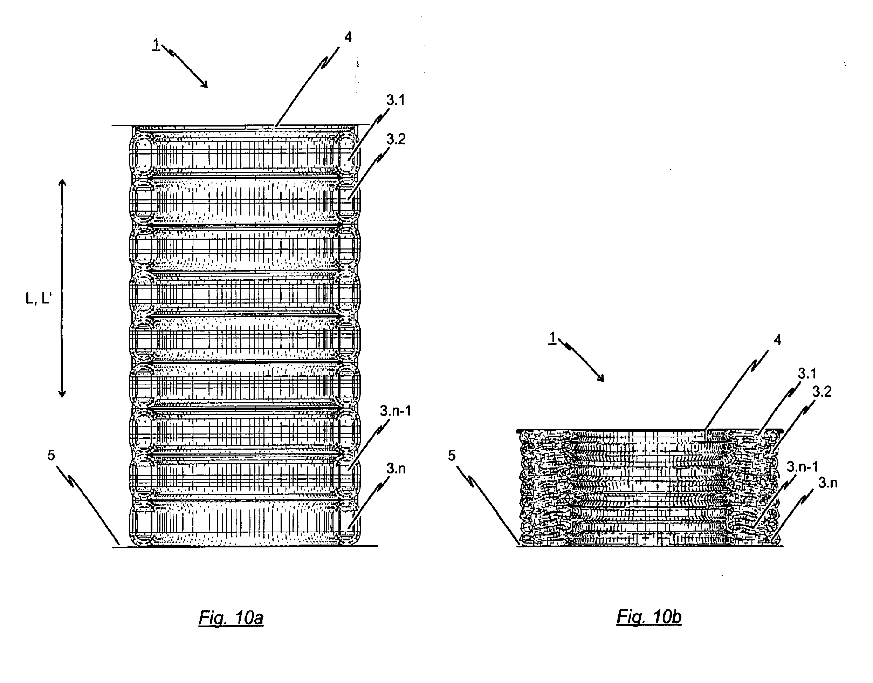

Nachfolgend wird unter Bezugnahme auf die Darstellungen in Fig. 10a und Fig. 10b die Funktionsweise des erfindungsgemäßen Energieverzehrelements 1 näher beschrieben. Obwohl in den Fig. 10a und 10b ein Energieverzehrelement 1 gezeigt ist, welches ein Verformungselement in Gestalt eines Hohlkörpers aufweist, bei welchem der Hohlkörper von mehreren torusförmigen Verformungselementen 3.1 bis 3.n ausgebildet wird, gelten die nachfolgenden Ausführungen im übertragenen Sinne auch für Energieverzehrelemente, die unter Verwendung eines helix- oder spiralförmigen Verformungselements aufgebaut sind.

In Fig. 10a ist ein Energieverzehrelement 1, wie es beispielsweise zuvor unter Bezugnahme auf die Darstellungen in Fig. 1 und Fig. 2 beschrieben wurde, im unverformten Zustand gezeigt. Fig. 10b zeigt das Energieverzehrelement 1 in einer Längsschnittansicht bei maximaler Verformung.

Anhand der Darstellungen ist zu erkennen, dass ein nach den Lehren der vorliegenden Erfindung aufgebautes Energieverzehrelement 1 nach Überschreiten einer vorab festlegbaren kritischen Ansprechkraft durch plastische Verformung der Hohlprotilquerschnitte entlang der Torusachse L Stoßenergie in Verformungsenergie und Wärme umwandelt. Dadurch, dass beim Energieverzehr der torusförmige Aufbau nicht zerstört wird, weist das Energieverzehrelement 1 auch im deformierten Zustand eine strukturelle Festigkeit in Längs- und Querrichtung auf. Dies ermöglicht es, dass das Energieverzehrelement 1 sowohl in axialer als auch radialer Richtung mit weiteren Bauteilen konstruktiv verbunden werden kann.

Wie es insbesondere der Fig. 10b zu entnehmen ist, werden beim Ansprechen des Energieverzehrelements 1 die aus dem Hohlprofil gebildeten torusförmigen Verformungselemente 3.1 bis 3.n des Verformungselements bei Ansprechen des Energieverzehrelements 1 in Längsrichtung des Energieverzehrelements 1 gestaucht. Dies gilt im übertragenen Sinne auch für ein Energieverzehrelement 1, bei welchem nicht ein oder mehrere torusförmige Verformungselemente, sondern ein helix- oder spiralförmiges Verformungselement zum Einsatz kommt. Bei einem helix- oder spiralförmigen Aufbau würde beim Ans sprechen des Energieverzehrelements eine kontinuierliche Verformung der Hohlprofilquerschnitte entlang der Helixachse bzw. entlang der Längsachse des Energieverzehrelements erfolgen, wobei dies dann auf einem nahezu gleichbleibenden Verformungskraftniveau in Richtung der Helix- bzw. Spirallängsachse erfolgt. Bei einem torusförmigen Aufbau des Energieverzehrelements erfolgt nach Ansprechen des Energieverzehrelements 1 eine sequentielle Verformung der Hohlprofilquerschnitte der einzelnen torusförmigen Verformungselemente 3.1 bis 3.n, so dass nur leicht oszillierende Verformungskräfte auftreten.

Unabhängig davon, ob ein helix- bzw. spiralförmiger Aufbau oder ein torusförmiger Aufbau für das Verformungselement 3 bzw. 3.1 gewählt wird, weist das Verformungselement in jedem Verformungszustand einen selbststabilisierenden Charakter auf. Die Gestaltung mit Profilen ermöglicht dabei ein kleines Verhältnis zwischen der Blocklänge des Energieverzehrelementes bei maximaler Verformung und der Ausgangslänge im unverformten Zustand.

Die Erfindung ist nicht auf die in den Figuren dargestellten Ausführungsformen des Energieverzehrelements 1 beschränkt. Insbesondere ist es denkbar, dass die Außenund/oder Innenfläche des als Hohlkörper ausgebildeten Energieverzehrelements 1 ausgesteift oder verschweißt werden kann, wodurch höhere statische und dynamische Festigkeiten sowohl in Längsrichtung als auch in Querrichtung des Energieverzehrelements 1 erreicht werden. Dabei wird das Verformungskraftniveau erhöht, wobei bei gleichen Profilquerschnitten und mit gleichen Materialdicken eine vorteilhafte Erhöhung der absorbierten Energie erfolgt, da der ausschöpfbare maximale Verformungsweg trotz der Schweißnähte nur geringfügig reduziert wird.

Auch ist es denkbar, dass das Energieverzehrelement 1 in Gestalt eines Hohlkörpers ausgeführt ist, dessen Querschnitt sich entlang der Längsachse verändert. Hierbei ist aber zu berücksichtigen, dass eine Verformung der Profilgeometrien in Längsrichtung des Energieverzehrelements gewährleistet bleiben muss. Beispiele für die Änderung des Querschnitts können zwei oder mehrere abwechselnd aneinander gereihte Querschnitte sein oder in eine Längsrichtung des Energieverzehrelements verlaufende Aufweitung oder Verjüngung des Querschnitts, so dass für die Grundform des Energieverzehrelements beispielsweise ein Kegel- oder Pyramidenstumpf entsteht. Ferner ist es denkbar, dass der Wickeldurchmesser der torusförmigen Verformungselemente bzw. des spiral- oder helixförmigen Verformungselements über die Länge des Verzehrelements variiert.

In Fig. 9 sind Beispiele für mögliche Profilquerschnitte dargestellt. Demnach sind geschlossene Hohlprofile einsetzbar mit beispielsweise Kreisring-, Rechteck-, Sechseckförmigen oder ovalen Querschnitten. Obwohl nicht explizit gezeigt, ist für die Profile auch eine offene Querschnittsform beispielsweise eine L-, U-, Doppel-T- oder Z-förmige Querschnittsform möglich.

Wie bereits angedeutet, eignet sich das erfindungsgemäße Energieverzehrelement als Stoßsicherung, welche eine Grundplatte und ein Kraftübertragungselement aufweist, wobei zwischen der Grundplatte und dem Kraftübertragungselement das Energieverzehrelement angeordnet ist. In einer bevorzugten Ausführungsform einer solchen Stoßsicherung ist das Energieverzehrelement spielfrei zwischen der Grundplatte und dem Kraftübertragungselement eingebaut.

Das Energieverzehrelement kann sowohl in axialer als auch radialer Richtung mit weiteren Bauteilen konstruktiv verbunden werden, da das Energieverzehrelement auch im deformierten Zustand eine strukturelle Festigkeit in Längs- und Querrichtung aufweist, die sogar höher als im undeformierten Ausgangszustand sein kann. Vorteilhaft wirkt sich eine Verbindung beispielsweise mit Innen oder Außen direkt angrenzendem Körper aus, der einen dem Energieverzehrelement entsprechend gleichen rohrförmigen Querschnitt besitzt, wobei eine zusätzlich gleitreibungsbehaftete Abstützung während des Verformungsvorganges einen gleichmäßigeren Verformungskraftverlauf erzeugen würde.

Eine Stoßsicherung, bei welcher das erfindungsgemäße Energieverzehrelement zum Einsatz kommt, eignet sich insbesondere als Seitenpuffer an der Stirnseite eines spurgeführten Fahrzeuges, insbesondere Schienenfahrzeuges, oder für einen Prellbock. Selbstverständlich sind aber auch andere Anwendungen wie z.B. für Fahrzeuge und stationäre Anwendungen denkbar.

## Patentansprüche

1. Energieverzehrelement (1) für Fahrzeuge und stationäre Anlagen in Gestalt eines sich in einer Längsrichtung (L) erstreckenden Hohlkörpers, wobei das Energieverzehrelement (1) eine die Mantelfläche des Hohlkörpers bildende Wand (2) aufweist, und wobei das Energieverzehrelement (1) ausgelegt ist, bei Überschreiten einer in eine Stirnseite des Energieverzehrelements (1) eingeleiteten kritischen Stoßkraft anzusprechen und dabei zumindest einen Teil der bei der Übertragung der Stoßkraft über das Energieverzehrelement (1) anfallenden Stoßenergie durch plastische Verformung in Verformungsenergie und Wärme umzuwandeln,
wobei mindestens ein aus einem Profil gebildetes und um die Längsachse (L) des Hohlkörpers laufendes Verformungselement (3, 3.1 bis 3.n) vorgesehen ist, welches die Wand (2) des Energieverzehrelements (1) bildet,
wobei das um die Längsachse (L) des Hohlkörpers laufende Verformungselement als helix- oder spiralförmiges Verformungselement (3) ausgebildet ist, dessen Längsachse (L) mit der Längsachse (L) des Hohlkörpers übereinstimmt, und
wobei das helix- oder spiralförmige Verformungselement (3) mindestens zwei vorzugsweise ohne Spalt aufeinanderliegende Windungen (7.1 bis 7.n) aufweist,
**dadurch gekennzeichnet, dass**
die Kontaktflächen der aufeinanderliegenden Windungen (7.1 bis 7.n) vorzugsweise punktweise stoffschlüssig miteinander verbunden sind.

2. Energieverzehrelement nach Anspruch 1,
wobei das mindestens eine Verformungselement (3, 3.1 bis 3.n) aus einem im Querschnitt geschlossenen Hohlprofil gebildet ist.

3. Energieverzehrelement (1) nach Anspruch 1 oder 2,
wobei das um die Längsachse (L) des Hohlkörpers laufende Verformungselement (3.1 bis 3.n) torusförmig ausgebildet ist, wobei die Rotationsachse (L') des torusförmigen Verformungselements (3.1 bis 3.n) mit der Längsachse (L) des Hohlkörpers übereinstimmt.

4. Energieverzehrelement (1) nach einem der vorhergehenden Ansprüche, wobei zusätzlich zu dem helix- oder spiralförmigen Verformungselement (3) ein aus einem Profil, insbesondere Hohlprofil gebildetes helix- oder spiralförmiges Zusatz-Verformungselement (6) vorgesehen ist, dessen Längsachse mit der Längsachse (L') des helix- oder spiralförmigen Verformungselements (3) übereinstimmt, wobei die Windungen des Zusatz-Verformungselements (6) vorzugsweise in einer zwischen den Windungen (7.1 bis 7.n) des Verformungselements (3) gebildeten Nut angeordnet sind, und wobei das Zusatz-Verformungselement (6) mit dem Verformungselement (3) vorzugsweise an mindestens einem Punkt stoffschlüssig verbunden ist.

5. Energieverzehrelement (1) nach Anspruch 4,
wobei das Zusatz-Verformungselement (6) eine im Vergleich zum Verformungselement (3) unterschiedliche Windungsrichtung und/oder Steigung aufweist.

6. Energieverzehrelement (1) nach einem der vorhergehenden Ansprüche, wobei mindestens zwei jeweils aus einem Profil, insbesondere Hohlprofil gebildete und um die Längsachse (L) des Hohlkörpers laufende Verformungselemente (3, 3.1 bis 3.n) vorgesehen sind, welche über Kontaktflächen aneinander stoßen, und wobei die mindestens zwei Verformungselemente (3, 3.1 bis 3.n) über in Längsrichtung (L) des Energieverzehrelements (1) verlaufende Verbindungen stoffschlüssig miteinander verbunden sind.

7. Energieverzehrelement (1) nach einem der vorhergehenden Ansprüche,
wobei das Profil, aus welchem das mindestens eine um die Längsachse (L) des Hohlköpers laufende Verformungselement (3, 3.1 bis 3.n) gebildet ist, beispielsweise einen kreisförmigen, elliptischen, hexagonalen oder rechteckigen Querschnitt aufweist.

8. Energieverzehrelement (1) nach einem der Ansprüche 1 und 3 bis 6,
wobei das Profil, aus welchem das mindestens eine um die Längsachse (L) des Hohlkörpers laufende Verformungselement (3, 3.1 bis 3.n) gebildet ist, als ein im Querschnitt offenes Profil, insbesondere als ein Profil mit einem L-, U-, Doppel-T- oder Z-förmigen Querschnitt ausgebildet ist.

9. Energieverzehrelement (1) nach einem der vorhergehenden Ansprüche,
wobei der Hohlkörper einen kreisförmigen, elliptischen, hexagonalen oder rechteckigen Querschnitt aufweist.

10. Energieverzehrelement (1) nach einem der vorhergehenden Ansprüche,
wobei der Querschnitt des Hohlköpers über die Längsrichtung (L) des Energieverzehrelements (1) unverändert ist.

11. Energieverzehrelement (1) nach einem der Ansprüche 1 bis 9, wobei der Querschnitt des Hohlkörpers über die Längsrichtung (L) des Energieverzehrelements (1) variiert.

12. Stoßsicherung, insbesondere zur Verwendung als Seitenpuffer an der Stirnseite eines Fahrzeuges, insbesondere Schienenfahrzeuges oder zur Verwendung in einer stationären Anlage, insbesondere in einem Prellbock, wobei die Stoßsicherung folgendes aufweist:
- eine Grundplatte (5);
- ein Kraftübertragungselement (4); und
- ein zwischen der Grundplatte (5) und dem Kraftübertragungselement (4) spielfrei eingebautes Energieverzehrelement (1) nach einem der vorhergehenden Ansprüche.

## Claims

1. An energy consumption element (1) for vehicles and stationary constructions in the form of a hollow body extending in a longitudinal direction (L), wherein the energy consumption element (1) comprises a wall (2) forming the peripheral surface of the hollow body, and wherein the energy consumption element (1) is designed to respond upon the exceeding of a critical impact force applied to a front end of said energy consumption element (1) and thereby convert at least a portion of the impact energy ensuing from the impact force being transmitted through the energy consumption element (1) into the energy and heat of deformation by plastic deformation;
wherein at least one deformation element (3, 3.1 to 3.n) formed from one profile and extending along the longitudinal axis (L) of the hollow body is provided which forms the wall (2) of said energy consumption element (1),
wherein the deformation element extending along the longitudinal axis (L) of the hollow body is configured as a helical or spiral-shaped deformation element (3),
its longitudinal axis (L) corresponding to the longitudinal axis (L) of the hollow body, and
wherein the helical or spiral-shaped deformation element (3) exhibits at least two stacked coils (7.1 to 7.n), preferably without intervening gap,
**characterized in that**
the contact surfaces of the adjoining coils (7.1 to 7.n) preferably join together by point-by-point material fit.

2. The energy consumption element according to claim 1,
wherein the at least one deformation element (3, 3.1 to 3.n) is formed from a cross-sectionally closed hollow profile.

3. The energy consumption element (1) according to claim 1 or 2,
wherein the deformation element (3.1 to 3.n) extending the longitudinal axis (L) of the hollow body is configured to be of toroidal shape, wherein the rotational axis (L') of the toroidal deformation element (3.1 to 3.n) corresponds to the longitudinal axis (L) of the hollow body.

4. The energy consumption element (1) according to any one of the preceding claims,
wherein additionally to the helical or spiral-shaped deformation element (3), an additional helical or spiral-shaped deformation element (6) formed from one profile, in particular a hollow profile, is provided, its longitudinal axis corresponding to the longitudinal axis (L') of the helical or spiral-shaped deformation element (3), wherein the coils of the additional deformation element (6) are preferably arranged in a groove formed between the coils (7.1 to 7.n) of the deformation element (3), and wherein the additional deformation element (6) is preferably connected to the deformation element (3) by material fit at least at one point.

5. The energy consumption element (1) according to claim 4,
wherein the additional deformation element (6) exhibits a different coiling direction and/or pitch than the deformation element (3).

6. The energy consumption element (1) according to any one of the preceding claims,
wherein at least two deformation elements (3, 3.1 to 3.n) are provided, each formed from one profile, in particular a hollow profile, and extending the longitudinal axis (L) of the hollow body and adjoining at contact surfaces, and wherein the at least two deformation elements (3, 3.1 to 3.n) are joined together in a material fit connection extending in the longitudinal direction (L) of the energy consumption element (1).

7. The energy consumption element (1) according to any one of the preceding claims,
wherein the profile from which the at least one deformation element (3, 3.1 to 3.n) extending along the longitudinal axis (L) of the hollow body is formed exhibits e.g. a circular, elliptical, hexagonal or rectangular cross section.

8. The energy consumption element (1) according to any one of claims 1 and 3 to 6,
wherein the profile from which the at least one deformation element (3, 3.1 to 3.n) extending along the longitudinal axis (L) of the hollow body is formed is configured as a cross-sectionally open profile, in particular as a profile having an "L", "U", double-T or Z-shaped cross section.

9. The energy consumption element (1) according to any one of the preceding claims, wherein the hollow body exhibits a circular, elliptical, hexagonal or rectangular cross section.

10. The energy consumption element (1) according to any one of the preceding claims, wherein the cross section of the hollow body does not vary over the longitudinal direction (L) of the energy consumption element (1).

11. The energy consumption element (1) according to any one of claims 1 to 9,
wherein the cross section of the hollow body varies over the longitudinal direction (L) of the energy consumption element (1).

12. Impact protection, in particular used as a side buffer on the front end of a vehicle, in particular a rail-bound vehicle, or for use in a stationary construction, in particular in a buffer stop, wherein the impact protection comprises the following:
- a base plate (5);
- a force-transferring element (4); and
- an energy consumption element (10) in accordance with any one of the preceding claims mounted without play between the base plate (5) and the force-transferring element (4).

## Revendications

1. Élément de consommation d'énergie (1) pour véhicules et pour installations stationnaires sous la configuration d'un corps creux étendu dans une direction longitudinale (L), l'élément de consommation d'énergie (1) comprenant une paroi (2) formant la surface enveloppe du corps creux, et l'élément de consommation d'énergie (1) étant conçu afin de réagir en cas de dépassement d'une force de choc critique appliquée à une face frontale de l'élément de consommation d'énergie (1) et afin de convertir au moins une partie de l'énergie de choc qui apparaît lors de la transmission de la force de choc via l'élément de consommation d'énergie (1), par déformation plastique en énergie de déformation et en chaleur,
dans lequel il est prévu au moins un élément de déformation (3, 3.1 à 3.n), formé par un profilé s'étendant autour de l'axe longitudinal (L) du corps creux, qui forme la paroi (2) de l'élément de consommation d'énergie (1),
dans lequel l'élément de déformation s'étendant autour de l'axe longitudinal (L) du corps creux est réalisé sous la forme d'un élément de déformation (3) de forme hélicoïdale ou spiralée dont l'axe longitudinal (L) coïncide avec l'axe longitudinal (L) du corps creux, et dans lequel l'élément de déformation (3) de forme hélicoïdale ou spiralée comprend au moins deux spires (7.1 à 7.n) mutuellement successives, de préférence sans intervalle,
**caractérisé en ce que**
les surfaces de contact des spires (7.1 à 7.N) mutuellement successives sont reliées l'une à l'autre par coopération de matières, de préférence de manière ponctuelle.

2. Élément de consommation d'énergie selon la revendication 1,
dans lequel ledit au moins un élément de déformation (3, 3.1 à 3.n) est formé à partir d'un profilé creux à section fermée.

3. Élément de consommation d'énergie (1) selon la revendication 1 ou 2,
dans lequel l'élément de déformation (3.1 à 3n) s'étendant autour de l'axe longitudinal (L) du corps creux est réalisé en forme de tore, tel que l'axe de révolution (L') de l'élément de déformation (3.1 à 3.n) en forme de tore coïncide avec l'axe longitudinal (L) du corps creux.

4. Élément de consommation d'énergie (1) selon l'une des revendications précédentes,
dans lequel, en supplément à l'élément de déformation (3) de forme hélicoïdale ou spiralée, il est prévu un élément de déformation additionnel (6) de forme hélicoïdale ou spiralée, réalisé à partir d'un profilé et en particulier d'un profilé creux, dont l'axe longitudinal coïncide avec l'axe longitudinal (L') de l'élément de déformation (3) de forme hélicoïdale ou spiralée, dans lequel les spires de l'élément de déformation additionnel (6) sont agencées de préférence dans une gorge ménagée entre les spires (7.1 à 7.n) de l'élément de déformation (3), et dans lequel l'élément de déformation additionnel (6) est relié à l'élément de déformation (3) par coopération de matières, de préférence en au moins un point.

5. Élément de consommation d'énergie (1) selon la revendication 4, dans lequel l'élément de déformation additionnel (6) présente une direction des spires et/ou un pas des spires différent(e) par comparaison à l'élément de déformation (3).

6. Élément de consommation d'énergie (1) selon l'une des revendications précédentes,
dans lequel il est prévu au moins deux éléments de déformation (3, 3.1 à 3.n) formés respectivement à partir d'un profilé, en particulier d'un profilé creux et s'étendant autour de l'axe longitudinal (L) du corps creux, lesquels sont en aboutement l'un contre l'autre via les surfaces de contact, et dans lequel lesdits au moins deux éléments de déformation (3, 3.1 à 3.n) sont reliés l'un à l'autre par coopération de matières au moyen de jonctions s'étendant en direction longitudinale (L) de l'élément de consommation d'énergie (1).

7. Élément de consommation d'énergie (1) selon l'une des revendications précédentes,
dans lequel le profilé à partir duquel est formé ledit au moins un élément de déformation (3, 3.1 à 3.n) s'étendant autour de l'axe longitudinal (L) du corps creux présente par exemple une section de forme circulaire, elliptique, hexagonale ou rectangulaire.

8. Élément de consommation d'énergie (1) selon l'une des revendications 1 et 3 à 6,
dans lequel le profilé à partir duquel est formé ledit au moins un élément de déformation (3, 3.1 à 3.n) s'étendant autour de l'axe longitudinal (L) est réalisé sous la forme d'un profilé ouvert en section transversale, en particulier d'un profilé à section en L, U, double T ou Z.

9. Élément de consommation d'énergie (1) selon l'une des revendications précédentes,
dans lequel le corps creux présent une section transversale de forme circulaire, elliptique, hexagonale ou rectangulaire.

10. Élément de consommation d'énergie (1) selon l'une des revendications précédentes,
dans lequel la section transversale du corps creux est sans modification sur la direction longitudinale (L) de l'élément de consommation d'énergie (1).

11. Élément de consommation d'énergie (1) selon l'une des revendications 1 à 9, dans lequel la section transversale du corps creux varie sur la direction longitudinale (L) de l'élément de consommation d'énergie (1).

12. Protection antichoc, en particulier pour l'utilisation comme tampon latéral au niveau de la face frontale d'un véhicule, en particulier d'un véhicule ferroviaire ou encore pour l'utilisation dans une installation stationnaire, en particulier dans un heurtoir, ladite protection antichoc comprenant les éléments suivants :
- une plaque de base (5) ;
- un élément de transmission de force (4) ; et
- un élément de consommation d'énergie (1), intégré sans jeu entre la plaque de base (5) et l'élément de transmission de force (4), selon l'une des revendications précédentes.
